# EUROPEAN PATENT APPLICATION

(11) **EP 1 595 724 A1**
(43) Date of publication of application: **16.11.2005**
(21) Application number: 05103950.1
(22) Date of filing: 11.05.2005
(51) Int. Cl.: B60G 7/00

(54) **Suspension arm for a vehicle**

(30) Priority: 14.05.2004 IT TO20040321
(71) Applicant: OCAP S.p.A., 10087 Valperga (Torino) (IT)
(72) Inventor: Tomas, Jean-Jacques, 10072 Caselle Torinese (Torino) (IT)
(74) Representative: Serra, Francesco

(57) **Abstract**

A suspension arm for a motor vehicle is described of the type comprising two peripherally welded shells which have sections of cellular structure. The shells have at least one part having spacers in the form of embossments (B) or in the form of bushes (D).

## Description

The present invention relates to a sheet metal suspension member of cellular structure for motor vehicles.

With reference to figures 1-4, a prior art suspension arm 1 can be formed (section A-A) with a solid section (figure 2), made of various materials such as cast iron, pressed steel, moulded aluminium alloys, die cast and compacted aluminium alloys; with a box section made of sheet steel (figure 3) or even as individual pressed metal sheets (figure 4).

The object of the invention is to provide suspension members of reduced weight whilst maintaining unchanged characteristics of mechanical resistance to stresses and to increase the strength and reduce the vibrations of suspension arms by the use of vibration-absorbing material.

The present invention achieves the said objects by means of a suspension arm for motor vehicles comprising at least two shells joined peripherally, having the characteristics set out specifically in the following claims.

Further characteristics and advantages of the present invention will become apparent during the course of the following detailed description, provided purely by way of non-limitative example, and given with reference to the attached drawing in which;

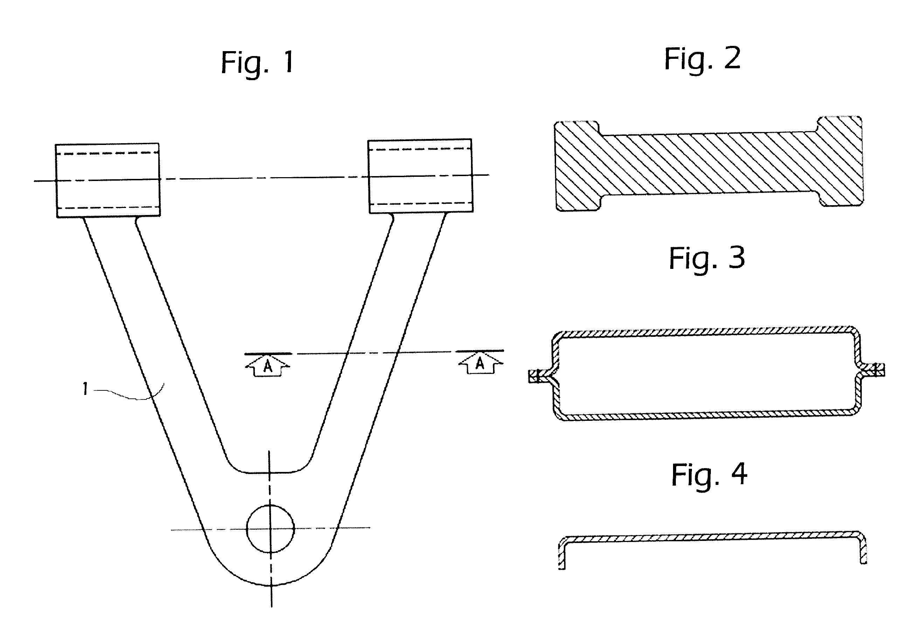

- Figures 1-4 (already described) represent a prior art suspension arm;

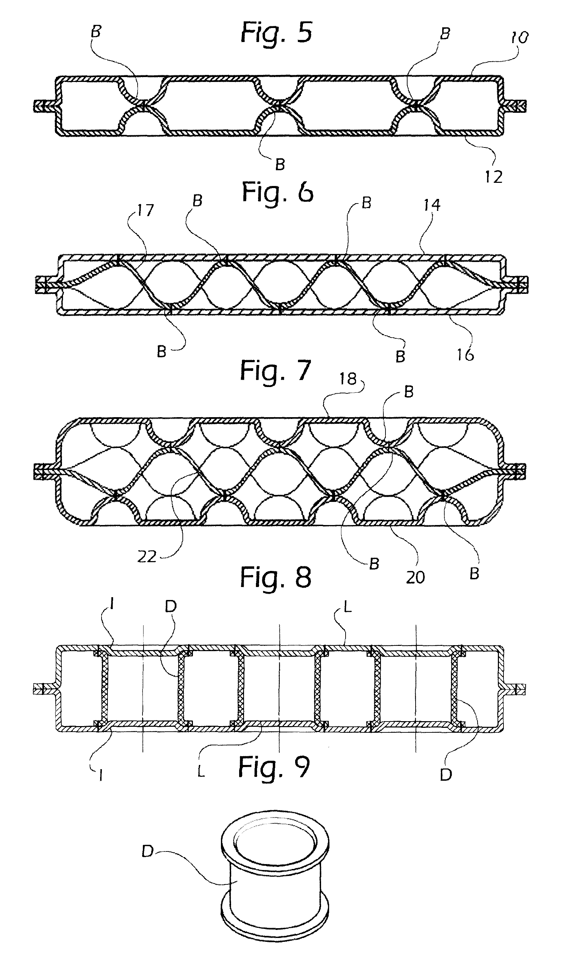

- Figures 5-8 are sectional views of various embodiments of a suspension member according to the invention;
- Figure 9 is a perspective view of a detail of figure 8;

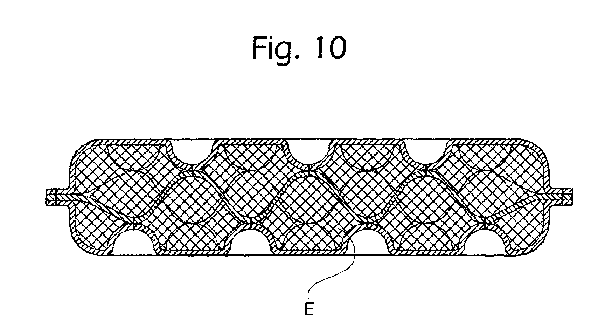

- Figure 10 shows a particular embodiment of figure 7; and

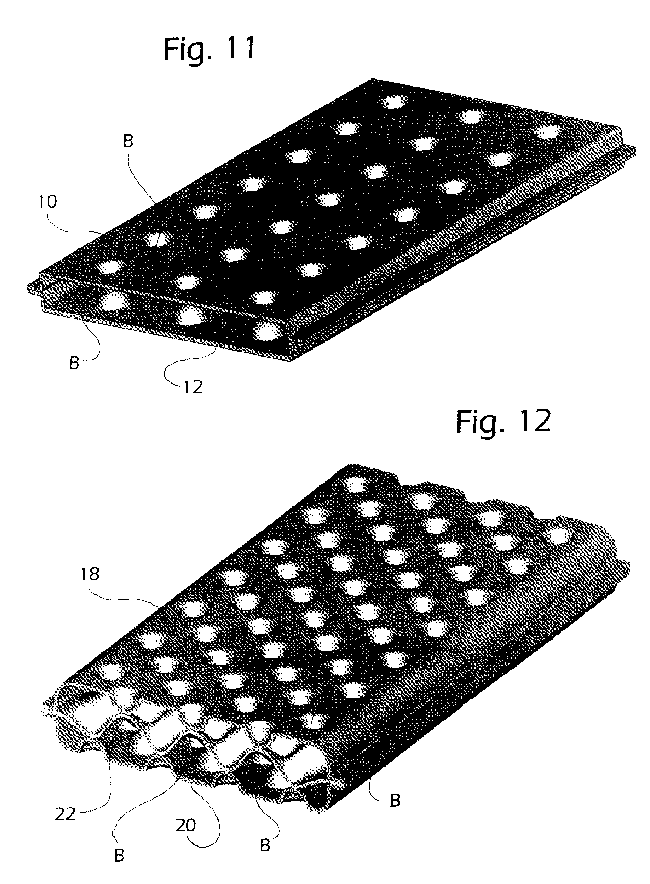

- Figures 11 and 12 are axonometric views of parts of the suspension members shown in figures 5 and 7.

Referring to figures 5 and 11, two embossed thin shells, respectively 10 and 12, are joined together in a permanent manner at the embossments B which perform a spacer function.

Referring to figure 6, the reference numerals 14 and 16 indicate smooth sheet metal shells with a central metal sheet 17 having double embossments interposed as a spacer, which is joined in a permanent manner to the shells 14 and 16 at the embossments B.

Figures 7 and 12 represent a section of a suspension arm comprising embossed shells, respectively 18 and 20, joined to a central metal sheet 22 having double embossments with a spacer function. The shells 18 and 20 are joined in a permanent manner to the central metal sheet 22 at the associated embossments B.

The technique for joining the embossed metal sheets causes them to be secured with respect to the depth of the embossments, which cannot have a height (depth) which is too great in order not to stress the metal thereby causing excessive reduction of the thickness and work hardening of the material.

In order to obtain metal sheets joined at any spacing practically at will, the connections system illustrated in Figure 8 is utilised, in which the metal sheets L have seats with entrances I into which are inserted bushes or spacers D joined in a permanent manner to the metal sheets L.

One of these bushes is shown in perspective in Figure 9.

It is apparent that by varying the length of the bushes or spacers D it is possible to vary the distance between the metal sheets L thus permitting the formation of suspension arms of very different thicknesses.

In Figure 10 is shown the embodiment of figure 7 with a sound absorbing material E introduced within the arm for a good sound-absorption properties by absorbing vibrations.

The previously-described cellular sheet metal sections can be advantageously utilised also in the construction of other elements than suspension arms for motor vehicles, such as, for example, floor pans and motor vehicle firewalls, structures for absorbing the energy of impacts etc.

Naturally, the principle of the invention remaining the same, wide variations can be introduced to what has been described and illustrated without by this departing from the ambit of protection of the present invention.

## Claims

1. A suspension arm for a motor vehicle comprising at least two shells joined peripherally, **characterised in that** they have sections of cellular structure and **in that** the said shells (10, 12; 14, 16; 18, 20; L) comprise at least one part with spacers (B, D, 17, 22).

2. A suspension arm for a motor vehicle according to claim 1, **characterised in that** the said spacers (B) are in the form of embossments.

3. A suspension arm for a motor vehicle, according to claim 1, **characterised in that** the said spacers (D) are bushes.

4. A suspension arm for a motor vehicle according to claim 1, **characterised in that** the said spacers (17, 22) are one or more doubly embossed metal sheets.

5. A suspension arm for a motor vehicle according to claims 1 to 4, **characterised in that** the said shells (10, 12; 14, 16; 18, 20; L) are also fixed together by means of welding in correspondence with the said spacers (B, D, 17, 22).

6. A suspension arm for a motor vehicle according to claims 1 to 5, **characterised in that** the said shells (10, 12; 14, 16; 18, 20; L) are fixed together by structural adhesive in correspondence with the said spacers (B, D, 17, 22).

7. A suspension arm for a motor vehicle according to claims 1 to 6, **characterised in that** it has vibration-absorbent material (E) within its interior. All substantially as described and illustrated and for the specified objects.
